# EUROPÄISCHE PATENTANMELDUNG

(11) **EP 1 959 430 A2**
(43) Veröffentlichungstag der Anmeldung: **20.08.2008**
(21) Anmeldenummer: 08002935.8
(22) Anmeldetag: 18.02.2008
(51) Int. Cl.: G10L 15/26

(54) **Verfahren zur automatischen Generierung von VoiceXML-sprachapplicationen aus Sprachdialogmodellen**

(30) Priorität: 19.02.2007 EP 07003406
(71) Anmelder: Deutsche Telekom AG, 53113 Bonn (DE); Technische Universität Berlin, 10623 Berlin (DE)
(72) Erfinder: Oberle, Frank, 10623 Berlin (DE); Kirchherr, Ralf, 63225 Langen (DE); Schumacher, Karlheinz, 64560 Riedstadt (DE); Schostag, Thomas, 15834 Rangsdorf (DE)
(74) Vertreter: Kampfenkel, Klaus

(57) **Zusammenfassung**

Die Erfindung zielt darauf ab, einen möglichst hohen Automatisierungsgrad bei der Entwicklung von VoiceXML-Sprachapplikationen zu erzielen, wobei die Sprachdialoge eine beliebige Komplexität aufweisen können.

Hierzu wird ein Verfahren zum automatisierten Generieren einer VoiceXML-Sprachapplikation bereitgestellt. Gemäß dem Verfahren wird ein aus dem UML-Zustandsdiagramm abgeleitetes, mehrere spezifische Metaobjekte umfassendes Metamodell zur Erzeugung wenigstens eines Sprachdialogmodells bereitgestellt. Unter Verwendung der spezifischen Metaobjekte wird wenigstens ein mehrere Call-Flow-Objekte umfassendes Sprachdialogmodell einer zu erzeugenden VoiceXML-Sprachapplikation erstellt und in einer vorbestimmten Form gespeichert. Unter Verwendung des gespeicherten Sprachdialogmodells wird ein Eclipse-Projekt automatisch erzeugt, das den Quell-Code der VoiceXML-Sprachapplikation enthält.

## Beschreibung

Die Erfindung betrifft ein Verfahren zum automatischen Erzeugen einer VoiceXML-Sprachapplikation.

Für die Entwicklung von VoiceXML (Voice Extended Markup Language)-Sprachapplikationen, sind bereits zahlreiche Entwicklungswerkzeuge (engl.: development tools) mit graphischer Benutzeroberfläche (engl.: graphical user interface (GUI)) bekannt, die, dem MDA (Model Driven Architecture)-Ansatz folgend, die SprachapplikationsEntwicklung per Drag&Drop von Objekten und Konfiguration der in den Dialog der Sprachapplikation gezogenen Objekte ermöglichen.

Bei einigen dieser Entwicklungswerkzeuge (z.B. VoiceObjects-Server von VoiceObjects) benötigen die generierten (VoiceXML-)Sprachapplikationen eine eigene, proprietäre Laufzeitumgebung, andere Entwicklungswerkzeuge (z.B. Talkback von Inference Communications) generieren hingegen VoiceXML-Sprachapplikationen nach dem Standard VoiceXML 2.0 oder 2.1, die auf jedem beliebigen Standard-Webserver genutzt (engl.: deployed) werden können. Grundsätzlich haben diese Entwicklungswerkzeuge gemein, dass sie die Entwicklung von Sprachapplikationen, welche lediglich eine geringe Komplexität aufweisen, spürbar vereinfachen und dabei dem Entwickler einer Sprachapplikation beispielsweise keinerlei VoiceXML-Kenntnisse abverlangen.

Die Weiterentwicklung der Sprachtechnologie in Richtung Erkennen und Verstehen von natürlicher Sprache (engl.: Natural Language Understanding (NLU)) hat jedoch dazu geführt, dass die Ansprüche an das Dialog-Design und die Dialogführung von Sprachapplikationen und damit auch an die Entwicklungswerkzeuge steigen und immer komplexer werden. Wenn von Advanced-Voice-Dialogen die Rede ist, dann sind damit unter anderem die folgenden Dialogeigenschaften gemeint:
- Mixed Initiative ermöglicht dem Anrufer, wann immer er möchte, selbst die Initiative ergreifen zu können.
- Multi-Slot-Grammatiken erlauben es dem Anrufer, mehrere Informationen in einem Satz zu nennen.
- Überbeantwortung erlaubt dem Anrufer, Äußerungen zu machen, die Informationen enthalten, die über die aktuelle Fragestellung hinausgehen. Die zusätzlichen Informationen werden gespeichert und im späteren Verlauf des Dialogs bei Bedarf verwertet.
- Dynamic Prompting ermöglicht Systemausgaben, die erst zur Laufzeit bekannt sind (z.B. Datenbankinhalte oder der Inhalt von Variablen).
- Unterbrechbarkeit von Dialogen eröffnet die Möglichkeit, den aktuellen Dialog bzw. Sub-Dialog zu unterbrechen, um einen anderen Sub-Dialog zu initiieren. Nach Abarbeitung des Sub-Dialogs kehrt der Anrufer wieder an die Stelle zurück, an der der vorherige Sub-Dialog unterbrochen wurde.
- Die Confidence-Analyse liefert ein Maß für die Sicherheit einer Spracherkenner-Hypothese. So können Rückfragen zur Bestätigung einer Hypothese nur für den Fall vorgesehen werden, dass ein Erkennungsresultat als "unsicher" gilt, der Confidence-Level also unterhalb einer zu konfigurierenden Schwelle liegt.
- Mit N-Best kann nicht nur auf die Spracherkenner-Hypothese mit dem höchsten Confidence-Level, sondern auf die N-besten Hypothesen zugegriffen werden, was die Behandlung von Verwechslungen bei der Spracherkennung ermöglicht.
- Die Multi Slot Confirmation ermöglicht die Verifizierung mehrerer Slot-Inhalte in einem Satz. Im Falle einer Ablehnung müssen Strategien greifen, die die Slots einzeln verifizieren.
- One Step Negation and'Correction ermöglicht dem Anrufer die Ablehnung und Korrektur einer Systemäußerung in einem Satz.
- Optionale Dialogkomponenten (z.B. Abfragen von Parametern/Feldern oder Rückmeldungen/Bestätigungen (engl.: confirmations)) müssen nur dann ausgeführt werden, wenn bestimmte Bedingungen erfüllt sind, die ggf. erst zur Laufzeit bekannt sind.
- Konsistenzprüfungen sollen sicherstellen, dass die im Dialog eingegeben Parameterwerte zueinander passen, beispielsweise eine Abfahrtszeit nicht nach einer Ankunftszeit liegt. Die Werte werden im Falle einer auftretenden Inkonsistenz je nach Dialogstrategie und -zustand korrigiert, gelöscht oder neu abgefragt.
- Von Ellipsen ist die Rede, wenn die Äußerung des Nutzers nur einen Teil der benötigten Information enthält, das Dialogsystem die fehlenden Informationen aber aus dem Kontext der Äußerung beziehen kann.

Eine bestimmte Auswahl von diesen Dialogeigenschaften ist je nach Anforderungsprofil und Dialogstrategie in geeigneter Weise zu kombinieren. Die Vielfalt und Komplexität der Kombinationsmöglichkeiten steht dabei bis heute einer Generalisierung, wie beispielsweise Rahmen von Konzepten für ein "geschlossenes" Metamodell für die Entwicklung von Sprachapplikationen, im Wege. Die Dialogeigenschaften einer Sprachapplikation müssen vielmehr von Fall zu Fall an die spezifischen Anforderungen angepasst werden können.

Als Beispiel hierfür kann die Umsetzung eines automatischen Reisebuchungssystems dienen, bei dem je nach gewünschtem Zeitraum unterschiedliche Angebote zu Flügen, Hotels, Mietwagen etc. zur Verfügung stehen und auszuwählen sind. Der Kunde kann während eines Dialogs mehrfach quer zwischen den unterschiedlichen Teildialogen springen und muss dabei seine Angaben immer wieder variieren können.

Ein Nachteil besteht deshalb darin, dass graphische Entwicklungswerkzeuge für Sprachapplikationen, wollen sie zugleich übersichtlich und erlernbar bleiben, bisher immer nur einen gewissen Ausschnitt der oben skizzierten Komplexität abbilden können. Je nach Kundenanforderung stoßen solche Entwicklungswerkzeuge daher häufig an ihre Grenzen.

Ein weiterer Nachteil besteht bei Entwicklungswerkzeugen, die einem der oben genannten Konzepte für ein "geschlossenes" Metamodell folgen. Mit dem Ziel, einen hohen Automatisierungsgrad zu erreichen und den Designer bzw. Entwickler einer Sprachapplikation zu entlasten, wird ein Großteil der Komplexität, die sich aus den Kombinationen der verschiedenen Dialogeigenschaften ergibt, bereits im Metamodell und in den Meta-Objekten aufgelöst. Diese Entwicklungswerkzeuge bieten jedoch zumeist keine Möglichkeit mehr, etwas anderes zu entwickeln, als im Metamodell vorgesehen ist.

Ein weiterer Nachteil ist in der Erweiterbarkeit oder Modifizierbarkeit des von den Entwicklungswerkzeugen generierten Quell-Code zu sehen. Denn eine Erweiterbarkeit oder Modifizierbarkeit besteht entweder gar nicht, wenn es sich um nicht standardisierten oder nicht lesbaren Quell-Code für eine proprietäre Laufzeitumgebung handelt, oder es findet sich dafür eine nur unzureichende Unterstützung.

Parallel hierzu veröffentlichte die Voice Browser Working Group des World Wide Web Consortium (W3C) im Januar 2006 den aktuell letzten Working Draft zur State Chart XML (SCXML). Die SCXML basiert auf der Theorie der "Harel State Tables" und wird von der Voice Browser Working Group in Verbindung mit einer zukünftigen Version von VoiceXML 3 angekündigt. Die Voice Browser Working Group zielt dabei auf eine getreuere Umsetzung des Model-View-Control-Paradigmas (MVC) ab, wobei die Architektur der zukünftigen VoiceXML 3 so ausgelegt werden soll, dass eine Trennung von Daten, Präsentationslogik und Fluss-Kontrolle (engl.: flow control) ermöglicht wird, was die bisherige VoiceXML 2.x nicht leistet, um damit die Modularisierbarkeit sowie die Wiederverwendbarkeit von VoiceXML-Code zu verbessern. Die Kontrolle des Dialogflusses soll dabei in SCXML-Dokumente ausgelagert werden, während im VoiceXML-Code dann nur noch die Präsentationslogik verbleiben soll. Die Standardisierungsbemühungen beim W3C sind zum gegenwärtigen Zeitpunkt jedoch noch nicht abgeschlossen.

Der Erfindung liegt somit die Aufgabe zugrunde, ein Verfahren zur Verfügung zu stellen, welches die oben genannten Nachteile beseitigt.

Die Aufgabe wird durch ein Verfahren mit den Verfahrensschritten gemäß dem Anspruch 1 gelöst.

Demnach ist ein Verfahren zum automatisierten Erzeugen einer VoiceXML-Sprachapplikation vorgesehen, welches neben dem Bereitstellen eines aus dem UML-Zustandsdiagramm abgeleiteten, mehrere spezifische Metaobjekte umfassenden Metamodells zur erzeugung wenigstens eines Sprachdialogmodells ferner das Erzeugen wenigstens eines mehrere Call-Flow-Objekte enthaltenden Sprachdialogmodells einer zu erzeugenden VoiceXML-Sprachapplikation unter Verwendung der spezifischen Metaobjekte, das Speichern des Sprachdialogmodells in einer vorbestimmte Form sowie das automatische Generieren eines Eclipse-Projekts, welches den Quell-Code der VoiceXML-Sprachapplikation enthält, und zwar unter Verwendung des gespeicherten Sprachdialogmodells, als weitere Verfahrensschritte umfasst.

Gemäß einer bevorzugten Ausführungsform des erfindungsgemäßen Verfahrens umfasst die VoiceXML-Sprachapplikation das Erkennen und Verstehen natürlicher Sprache.

Zweckmäßiger Weise ist bei dem erfindungsgemäßen Verfahren ferner vorgesehen, dass das Sprachdialogmodell in einer XMI- oder einer SCXML-Form abgespeichert wird.

Gemäß einer vorteilhaften Ausführungsform des erfindungsgemäßen Verfahrens wird das Sprachdialogmodell zur strukturierten grafischen Darstellung komplexer Sprachdialoge in mehrere unterschiedliche Sprachdialogteilmodelle unterteilt.

In einer weiteren vorteilhaften Ausführungsform des erfindungsgemäßen Verfahrens enthält zum einen das Eclipse-Projekt für jedes Sprachdialogmodell und/oder jedes Sprachdialogteilmodell jeweils ein Verzeichnis, wobei die Bezeichnung eines Verzeichnisses der Bezeichnung des zugehörigen Sprachdialog- oder Sprachdialogteilmodells entspricht und wobei die Struktur der Verzeichnisse die Struktur der jeweiligen Sprachdialog- oder Sprachdialogteilmodelle widerspiegelt, zum anderen enthält jedes Verzeichnis für jedes Call-Flow-Objekt des zugehörenden Sprachdialog- oder Sprachdialogteilmodellse eine Datei, wobei die Bezeichnung der Datei der bezeichnung des zugehörigen Call-Flow-Objekts entspricht.

In einer besonders bevorzugten Ausführungsform umfasst das erfindungsgemäße Verfahren ferner das automatische Generieren einer zur VoiceXML-Sprachapplikation gehörenden Prompt-Liste, welche die notwendigen Sprachausgaben und Eingabeaufforderungen enthält, und zwar unter Verwendung des gespeicherten Sprachdialogmodells, sowie das automatische Generieren von XML-Konfigurationsdateien unter Verwendung der Prompt-Liste und das automatische Ablegen der XML-Konfigurationsdateien in ein hierfür vorgesehenes Verzeichnis innerhalb des Eclipse-Projekts als weitere Verfahrensschritte.

Vorteilhafter Weise ist bei dem erfindungsgemäßen Verfahren die Prompt-Liste eine Excel-Datei, welche wenigstens ein Tabellenblatt enthält.

In einer weiteren vorteilhaften Ausführungsform des erfindungsgemäßen Verfahrens enthält zum einen die Excel-Datei für jedes Sprachdialogmodell und jedes Sprachdialogteilmodell jeweils ein Tabellenblatt, wobei die Bezeichnung eines Tabellenblattes der Bezeichnung des zugehörigen Sprachdialog- oder Sprachdialogteilmodells entspricht.

Gemäß einer weiteren bevorzugten Ausführungsform des erfindungsgemäßen Verfahrens sind ferner die Schritte des Modifizierens des Sprachdialogmodells oder wenigstens eines Sprachdialogteilmodells und/oder des automatisch generierten Quell-Code und/oder der automatisch generierten Prompt-Liste sowie des automatischen Zusammenführens aller vorgenommenen Modifizierungen und Speicherns im Eclipse-Projekt, umfasst.

Für das modellbasierte Design einer VoiceXML-Sprachapplikation wird ein spezielles Metamodell aus dem Zustandsdiagramm der Unified Modeling Language (UML) abgeleitet. Dieses Metamodell, das sogenannte Voice-Dialog-Profil, umfasst eine Palette spezifischer Meta-Objekte, die sogenannten Call-Flow-Objekte. Dabei handelt es sich um einen überschaubaren und deswegen leicht erlernbaren Zeichensatz, der es dem Designer von Sprachapplikationen erlaubt, beliebig komplexe NLU-Sprachdialoge übersichtlich graphisch darzustellen.

Da das UML-Zustandsdiagramm bereits eine weit verbreitete Methode zur graphischen Darstellung von Prozessen ist, verspricht die graphische Darstellung von VoiceXML-Sprachapplikationen mittels des aus dem UML-Zustanddiagramm abgeleiteten Voice-Dialog-Profils ein hohes Maß an Verständlichkeit und Akzeptanz nicht nur für einen eng begrenzten Expertenkreis. Da die Repräsentation des Sprachdialogflusses (engl.: call flow) als Schnittstelle und Plattform für die inhaltliche Abstimmung mit dem Kunden gilt, ist es von großer Bedeutung, dass die graphische Darstellung des Sprachdialogflusses für jedermann mit einem vergleichsweise geringen Einarbeitungsaufwand zugänglich und verständlich ist.

Vor dem Hintergrund der aktuellen Standardisierungsbemühungen des W3C liefert die enge Verwandtschaft des abgeleiteten Metamodells mit dem Ansatz der "Harel State Tables", auf denen die Auszeichnungssprache SCXML beruht, ein weiteres Argument für den Ansatz der vorliegenden Erfindung.

Die Erfindung basiert ausschließlich auf bestehenden Standards wie UML, XMI, VoiceXML, J2EE, JSTL, Log4J und XML. Sie bietet damit ein Maximum an Modularität, Offenheit, Kompatibilität, Interoperabilität und Erweiterbarkeit. Somit wird für die generierte VoiceXML-Sprachapplikation keine proprietäre Laufzeitumgebung benötigt.

Als Eingang erfordert der Prozess zur automatischen Generierung der VoiceXML-Sprachapplikation ausgehend von einem Sprachdialogmodell, welches mittels der Call-Flow-Objekte erstellt wurde, derzeit die Repräsentation des Sprachdialogmodells als XMI (XML Metadata Interchange)-Datei. Für den Fall, dass die Standardisierung des W3C zur SCXML abgeschlossen ist, soll XMI jedoch durch SCXML abgelöst werden.

Als Ergebnis des automatischen Generierungsprozesses der VoiceXML-Sprachapplikation wird ein komplettes Eclipse-Projekt erzeugt. Bei Eclipse handelt es sich um ein quelloffenes (engl.: open source) Entwicklungswerkzeug, genauer gesagt um eine integrierte Entwicklungsumgebung (engl.: integrated development environment (IDE)), die mittels sogenannter Plug-Ins um zusätzliche Funktionen erweitert werden kann. Das erzeugte Eclipse-Projekt enthält dabei den gesamten generierten Quell-Code der VoiceXML-Sprachapplikation, d.h. die notwendigen VoiceXML-Dateien (dynamische JSP-Dateien mit dem VoiceXML-Code des Sprachdialogs), die Servlet-Stubs der Java-Klassen, die ASR-Grammatik-Stubs für die Spracherkennung (engl.: automated speech recocnition (ASR)), die XML-Konfigurationsdateien der Web-Applikation, alle erforderlichen Bibliotheken (engl.: libraries) sowie die Eclipse-Projekt-Definitionsdateien.

Ferner wird auch eine Prompt-Liste automatisch generiert, welche die Sprachausgaben und Eingabeaufforderungen, die sogenannten Prompts, enthält, die zur Umsetzung des spezifizierten Sprachdialogs benötigt werden.

Ein Maximum an Transparenz für die spätere Erweiterbarkeit und Wartbarkeit des generierten Quell-Code wird dadurch gewährleistet, dass sich die Namen der Sprachdiagmodelle und der darin enthaltenen Objekte in den Namen der generierten Verzeichnisstrukturen und der darin enthaltenen Quell-Code-Dateien widerspiegeln.

Das Verfahren ermöglicht einen hohen Automatisierungsgrad sowie die Konsistenzsicherung zwischen den JavaServer Pages (JSPs), Java-Klassen (Servlets), XML-Konfigurationsdateien und Grammatik-Dateien mit einem Maximum an Modularität und Erweiterbarkeit. Dadurch kann auf die unterschiedlichsten Anforderungen flexibel reagiert werden.

Das Verfahren unterstützt die parallele Weiterentwicklung der VoiceXML-Sprachapplikation auf drei Ebenen, denn es ist sowohl möglich, das Sprachdialogmodell weiterzuentwickeln, als auch manuell direkt den automatisch generierten Quell-Code und/oder die automatisch generierte Prompt-Liste zu bearbeiten. Anschließend stellt ein automatischer Merging-Prozess wieder die Konsistenz zwischen den unterschiedlichen Arbeitsständen der drei Ebenen her, indem die Modifizierungen (Änderungen, Erweiterungen und/oder Löschungen) am Sprachdialogmodell automatisch mit den in der Zwischenzeit erfolgten manuellen Modifizierungen am Quell-Code und/oder an der Prompt-Liste zusammengeführt (engl.: merge) werden. Manuelle Anpassungen sind lediglich dann erforderlich, wenn es während des automatischen Merging-Prozesses zu Konflikten zwischen den einzelnen vorgenommenen Modifikationen im Sprachdialogmodell, im Quell-Code und/oder in der Promt-Liste kommt.

Die Integration aller für die Entwicklung einer VoiceXML-Sprachapplikation erforderlichen Prozesse in die Eclipse-IDE sowie der Zugriff auf alle Prozesse über sogenannte, als Plug-Ins realisierte Assistenten (engl.: wizards) ermöglichen die Sprachapplikationsentwicklung von einer integrierten Arbeitsfläche (engl.: workbench) aus, die vom modellbasierten Design der Sprachapplikation über die Formulierung der Prompts, die Generierung und die Aktualisierung sämtlicher Projekt-Definitions- und Quell-Code-Dateien sowie der Verzeichnisstrukturen, bis hin zur manuellen Anpassung des Quell-Code, Kompilierung des Projekts und Ausführung der Sprachapplikation Unterstützung für alle Schritte der Sprachapplikationsentwicklung bereitstellt.

Die Erfindung wird nachfolgend anhand eines bevorzugten Ausführungsbeispiels unter Bezugnahme auf die beigefügten Zeichnungen näher erläutert.

Es zeigen:
- Fig. 1: schematisch ein Flussdiagramm der Abfolge der Arbeitsschritte zur Entwicklung einer VoiceXML-Sprachapplikation;
- Fig. 2: eine Auswahl von Call-Flow-Objekten des Voice-Dialog-Profils;
- Fig. 3: die Palette spezifischer Call-Flow-Objekte zur übersichtlichen graphischen Darstellung beliebig komplexer NLU-Sprachdialoge;
- Fig. 4: schematisch einen Überblick über den Prozess der automatischen Generierung einer VoiceXML-Sprachapplikation.

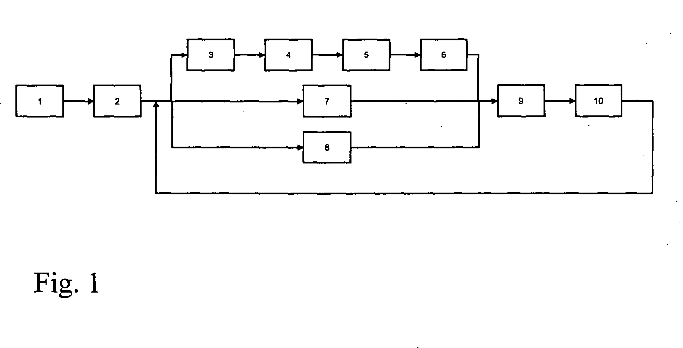

Der Work-Flow für das Entwickeln einer VoiceXML-Applikation unter Anwendung des erfindungsgemäßen Verfahrens ist in Figur 1 dargestellt und umfasst die folgenden Schritte:
1. Design des Sprachdialogflusses als Sprachdialogmodell unter Verwendung des Voice-Dialog-Profils, einer Palette spezifischen Call-Flow-Objekte.
2. Automatische Generierung des Eclipse-Projekts und der Prompt-Liste, die dann als eine Excel-Datei vorliegt, mittels des automatischen Generierungsprozesses (Application Buildung Wizard) basierend auf der XMI-Repräsentation des Sprachdialogmodells.
3. (Manuelle) Komplettierung der Prompt-Liste durch Ausformulierung der (fehlenden) Prompts.
4. Automatische Generierung der XML-Konfiguationsdateien aus der komplettierten Prompt-Liste, automatische Ablage der Dateien in dem hierfür vorgesehenen Verzeichnis des Eclipse-Projekts und automatische Generierung der Processing-Script-Liste für die Aufnahmesoftware des Tonstudios durch Anwendung des Prompt Generation Wizard.
5. Prompt-Produktion mit halbautomatischem Studio-Aufnahmesystem.
6. Automatische Synchronisation der Namens- und Verzeichnisstruktur der produzierten Prompts mit den XML-Konfigurationsdateien durch Anwendung des Prompt Generation.Wizard auf Grundlage der Processing-Script-Liste.
7. (Manuelle) Modifizierung der Quell-Code-Dateien (JSP-Dateien, Servlet- und ASR-Grammatik-Stubs) im Eclipse-Projekt.
8. (Manuelle) Modifizierung (Änderung und Erweiterung) am Sprachdialogmodell.
9. Automatisches Zusammenführen der unterschiedlichen Arbeitsstände des Sprachdialogmodells, des Eclipse-Projekts und der Prompt-Liste mittels des automatischen Merging-Prozesses (Update Wizard), welcher die jeweils manuell vorgenommenen Modifizierungen zusammenführt und somit für Konsistenz zwischen den drei Ebenen sorgt.
10. Manuelles Anpassen und Zusammenführen lediglich dann, wenn Konflikte zwischen den manuell vorgenommenen Modifizierungen bestehen.

Die Abfolge der Arbeitsschritte 1 bis 10 zur Entwicklung einer VoiceXML-Sprachapplikation ist aus Figur 1 ersichtlich.

Das Modellieren automatischer Sprachdialoge mittels des Voice-Dialog-Profils wird nachfolgend genauer erläutert. Die Strukturierung komplexer Sprachdialogflüsse erfolgt dadurch, dass ein Sprachdialogfluss durch ein Sprachdialogmodell dargestellt werden kann, welches in mehrere unterschiedliche Teilmodelle aufgeteilt werden kann. Die einzelnen (Teil-)Modelle, auch Module genannt, werden jeweils durch ihren Namen, z.B. "myModule", definiert. Diese Aufteilung des Sprachdialogflusses in mehrere Teilmodelle spiegelt sich später in der Verzeichnisstruktur des durch den automatischen Generierungsprozess (Application Building Wizard) generierten Eclipse-Projekts derart wieder, dass dabei die Namen der einzelnen Teilmodelle den Namen der Verzeichnisse entsprechen, in denen die JSP-, Servlet-, XML-Konfigurations- und Grammatik-Dateien abgelegt werden. Somit können diese Dateien den zugehörigen Sprachdialogmodellen bzw. -teilmodellen ganz einfach zugeordnet werden.

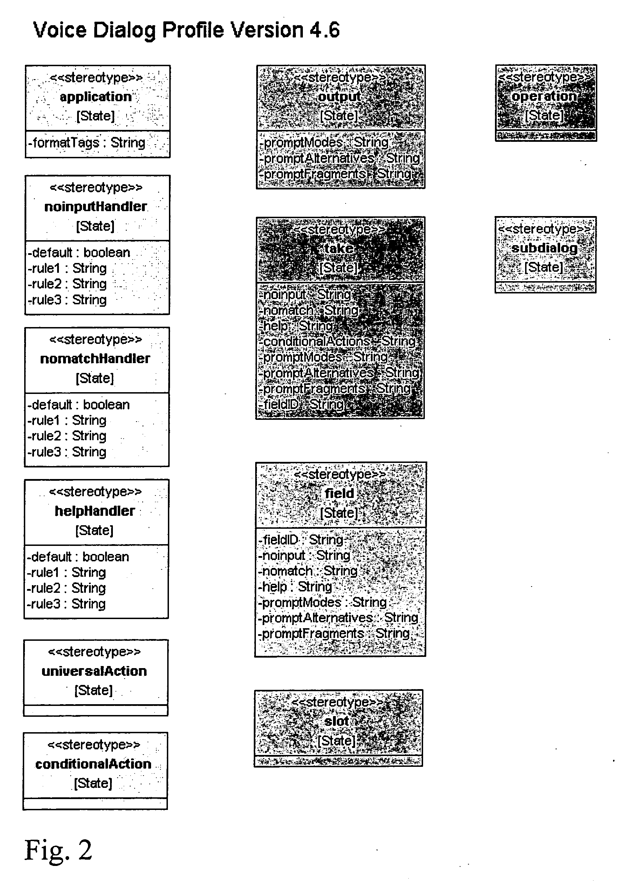

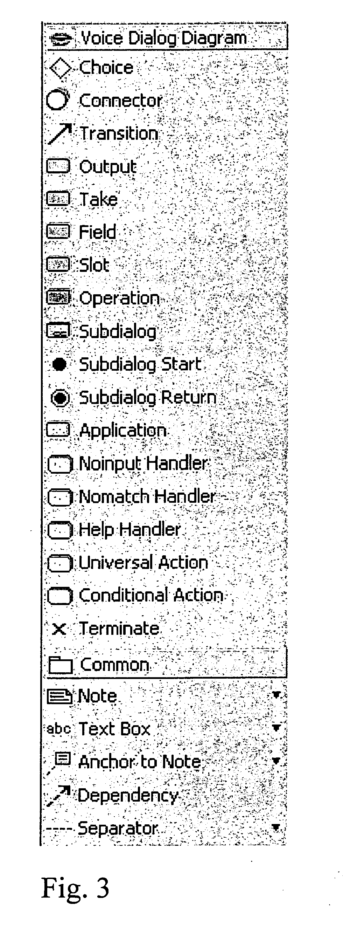

Um den Dialog-Designer bzw. -Entwickler in die Lage zu versetzen, Sprachdialoge von beliebiger Komplexität mit Natural Language Understanding, Mixed Initiative und Multi Slot Processing zu entwerfen, wird aus dem UML-Zustandsdiagramm das in Figur 2 dargestellte Voice-Dialog-Profil abgeleitet, welches die in Figur 3 dargestellte Palette mit folgenden spezifischen Call-Flow-Objekten umfasst:
- Das Application-Objekt ist der Startpunkt der Applikation. Als zusammengesetztes Objekt kann es einen oder mehrere benutzerdefinierte Handler für die Events "nomatch", "noinput", "help" und für Universal oder Conditional Actions enthalten. Die Handler dienen zur Erweiterung des Default-Handling.
- Nomatch-, Noinput- und Help Handler definieren die Eskalationsschritte für die entsprechenden Events und können von jedem beliebigen Take- oder Field-Objekt verwendet werden. Sie müssen im Application-Objekt eingefügt werden.
- Universal- und Conditional Actions müssen in das Application-Objekt eingefügt werden. Universal Actions sind überall in der Applikation verfügbar, Conditional Actions können von jedem Take- oder Field-Objekt bei Bedarf verwendet werden.
- Das Take-Objekt ist das Herzstück eines Sprachdialogflusses. Es definiert die Interaktion zwischen dem System bzw. der VOiceXML-Sprachapplikation und dem Nutzer. Versteht man dabei jedes Paar von Prompt des Systems und resultierender Antwort des Nutzers als ein Take, spiegelt ein Sprachdialogfluss im Wesentlichen die logische Abfolge unterschiedlicher Takes wieder. Transitionen zwischen den Take-Objekten repräsentieren die Übergänge von einem Take in den nächsten und die zugehörigen Vorbedingungen. Dabei beinhaltet ein Take-Objekt nicht nur den Systemprompt sondern auch alle Systemreaktionen auf die Events "nomatch", "noinput" and "help". Take-Objekte sind zusammengesetzte Objekte, sie können Field- und Slot-Objekte enthalten, abhängig von der Strategie und Komplexität im jeweiligen Dialogschritt (geführter Dialog oder Mixed Initiative) und von der Art der Weiterverarbeitung der von der Spracherkennung zurückgelieferten Slotinhalte.
- Das Output-Objekt repräsentiert Systemausgaben ohne Interaktion mit dem Nutzer.
- Das Field-Objekt kann in das Take-Objekt eingefügt werden. Es definiert einen nachgeordneten Dialogschritt für ein Take, bei dem nach einem undefinierten Eingabeparameter gefragt wird, der in der initialen Äußerung des Nutzers noch nicht enthalten war. Ein Take gilt erst dann als erfolgreich beendet, wenn alle dazu definierten Field-Objekte gefüllt wurden.
- Das Slot-Objekt kann in ein Take-Objekt eingefügt werden und definiert optionale Eingabeparameter, die zusätzlich in einem Take gefüllt werden können (Überbeantwortung).
- Das Operation-Objekt dient als Platzhalter für alle benutzerdefinierten Prozesse, die nicht durch eines der im Voice-Dialog-Profil enthaltenen Objekte abgebildet werden können. In erster Linie ist die Operation nützlich zur Integration von serverseitigen Prozessen wie z.B. Konsistenz- und Wertebereichsprüfungen oder Datenbankabfragen.
- Das Choice-Objekt repräsentiert eine Verzweigung im Sprachdialogfluss.
- Das Connection-Objekt repräsentiert eine Sprungstelle im Sprachdialogfluss, sowohl innerhalb eines Sprachdialogmodells, als auch zwischen unterschiedlichen Teilmodellen.
- Das Terminate-Objekt kennzeichnet das reguläre Ende einer Sitzung (engl.: session), d.h. eines Sprachdialogs.
- Eine Transition verbindet die Objekte des Sprachdialogflusses.
- Notes dienen zur Verbesserung der Lesbarkeit eines Sprachdialogflusses.
- Sub-Dialoge werden benötigt, wenn bestimmte Dialogsequenzen mehr als einmal im Sprachdialogfluss eingefügt werden müssen.

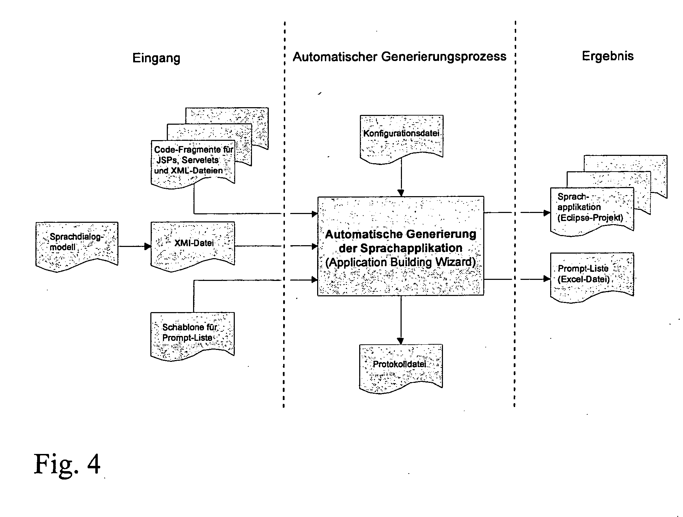

Der in Figur 4 dargestellte Prozess der automatischen Generierung einer VoiceXML-Sprachapplikation auf Basis des Modells des Sprachdialogflusses, das mittels der Call-Flow-Objekte des Voice-Dialog-Profils erstellt wurde, benötigt als Eingang zunächst die Repräsentation des Sprachdialogmodells als XMI-Datei sowie die Code-Fragmente für die JSPs, Servlets und XML-Konfigurationsdateien, wobei die im Voice-Dialog-Profil definierten Objekte ferner auch die Regeln bestimmen, wie die Code-Fragmente zusammenzusetzen sind. Zum Generieren der Prompt-Liste wird außerdem eine entsprechende Schablone (engl.: template) benötigt.

Als Ergebnis des automatischen Generierungsprozesses wird mit Hilfe des Application Building Wizard das vollständige Eclipse-Projekt, das den gesamten generierten Quell-Code der VoiceXML-Sprachapplikation, d.h. die notwendigen VoiceXML-Dokumente (dynamische JSP-Dateien mit dem VoiceXML-Code des Dialogs), die Servlet-Stubs der Java-Klassen und ASR-Grammtik-Stubs für die Spracherkennung, die XML-Konfigurationdateien der Web-Applikation sowie alle erforderlichen Bibliotheken (engl.: libraries) und Eclipse-Projekt-Definitionsdateien enthält. Darüber hinaus wird automatisch die Prompt-Liste erzeugt, die alle für den spezifizierten Sprachdialog notwendigen Prompts enthält und manuell nur noch komplettiert werden muss, indem die Prompts ausformuliert werden.

Der zum automatischen Generierungsprozess gehörende Algorithmus für das Parsen und Interpretieren des Sprachdialogmodells, der sogenannte Call-Flow-Interpretation-Algorithmus, ist so implementiert, dass er die einzelnen verschiedenen Teilmodelle eines Sprachdialogflusses und die Objekte, die in ihnen enthalten sind, in den Namen der generierten Verzeichnisstrukturen und der darin enthaltenen Quell-Code-Dateien widerspiegelt, um damit ein Maximum an Modularität, Lesbarkeit und Erweiterbarkeit des generierten Quell-Code sicherzustellen.

Die prinzipielle Wirkungsweise des Call-Flow-Interpretation-Algorithmus kann wie folgt beschrieben werden:

Für den initialen Zustand wird zunächst das Application-Objekt ausgewertet, das den Namen der Applikation und zahlreiche applikationsweit gültige Handler-Objekte definiert. Das Application-Objekt ist zugleich der Startpunkt der Applikation. Im initialen Zustand enthält das Eclipse-Projekt eine Start-JSP-Datei, die auch einen Platzhalter für das Objekt enthält, auf das die erste Transition zeigt, die vom Application-Objekt aus startet.

Enthält eine JSP-Datei im Quell-Code zunächst nur den Platzhalter für das Zielobjekt einer Transition, spricht man von einer unaufgelösten Transition. Immer dann, wenn eine unaufgelöste Transition in eine JSP-Datei eingefügt wird, wird sie zugleich auf einen Stapel (engl.: stack) "gelegt", in dem für jede unaufgelöste Transition deren ID, die ID des Zielobjekts sowie der Name der JSP-Datei, wo die Transition aufzulösen ist, abgelegt ist. Im initialen Zustand befindet sich mindestens eine Transition im Stapel, und zwar die am Application-Objekt startende erste Transition (außerdem können bereits Transitionen durch die Handler im Application-Objekt definiert sein, die in das Application-Root-Dokument einzufügen sind).

Ausgehend vom initialen Zustand des Eclipse-Projekts beginnt der Call-Flow-Interpretation-Algorithmus nun damit, nacheinander die im Stapel abgelegten Transitionen aufzulösen, indem die zu den Objekten des Voice-Dialog-Profils definierten Regeln angewendet werden und auf Grundlage der bereitgestellten Code-Fragmente Quell-Code anstelle des zugehörigen Platzhalters generiert und zusammengesetzt wird. Sofern von dem jeweiligen Zielobjekt wiederum Transitionen ausgehen, werden in jedem Schritt wiederum ein oder mehrere unaufgelöste Transitionen in den Quell-Code eingefügt und auf dem Stapel zur späteren Bearbeitung abgelegt. Das UML-Dialogmodell gilt erst dann als abgearbeitet, wenn keine Transition mehr im Stapel abgelegt ist.

Die Hauptschleife für die Interpretation des Sprachdialogmodells lautet wie folgt:

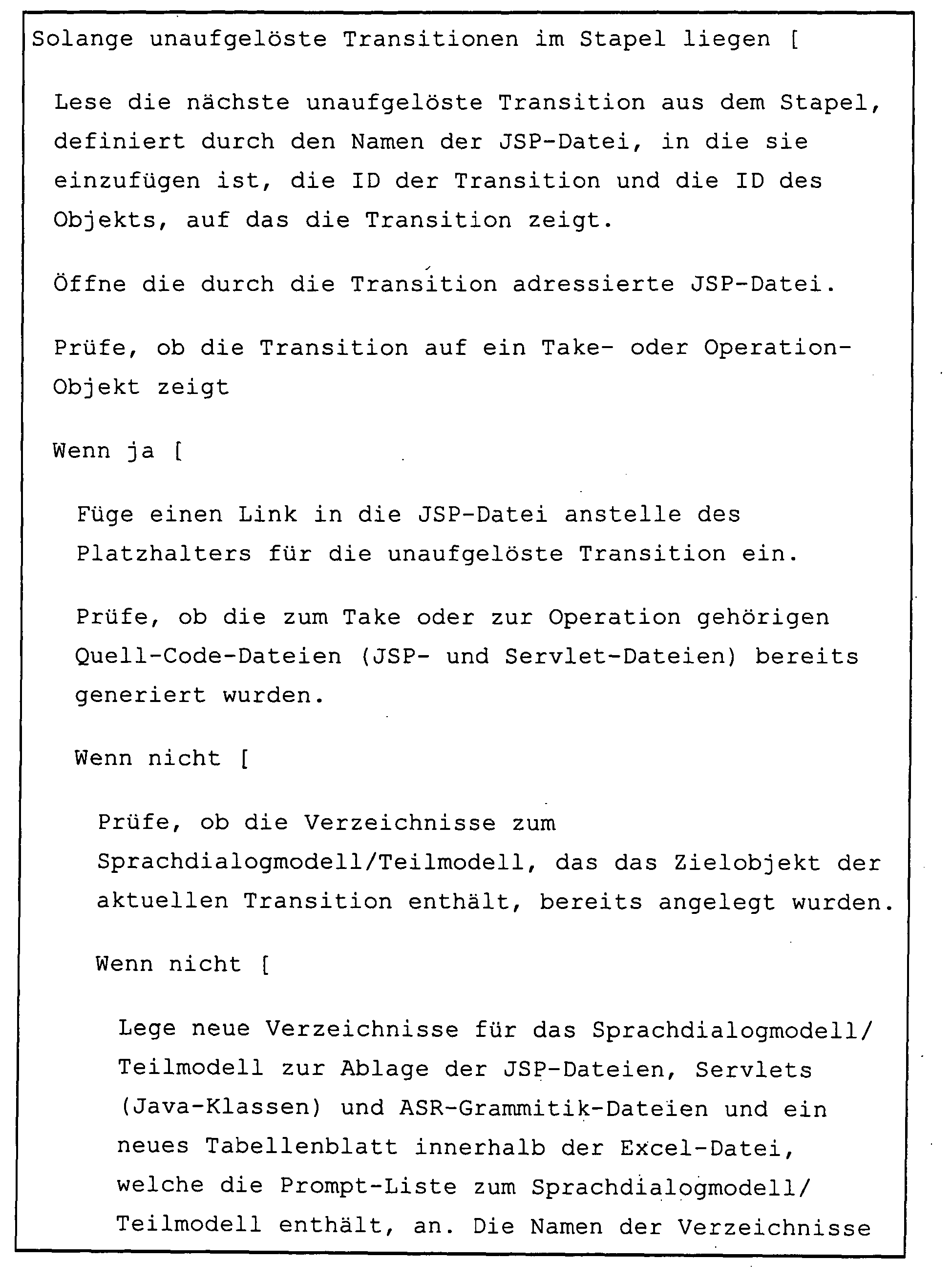

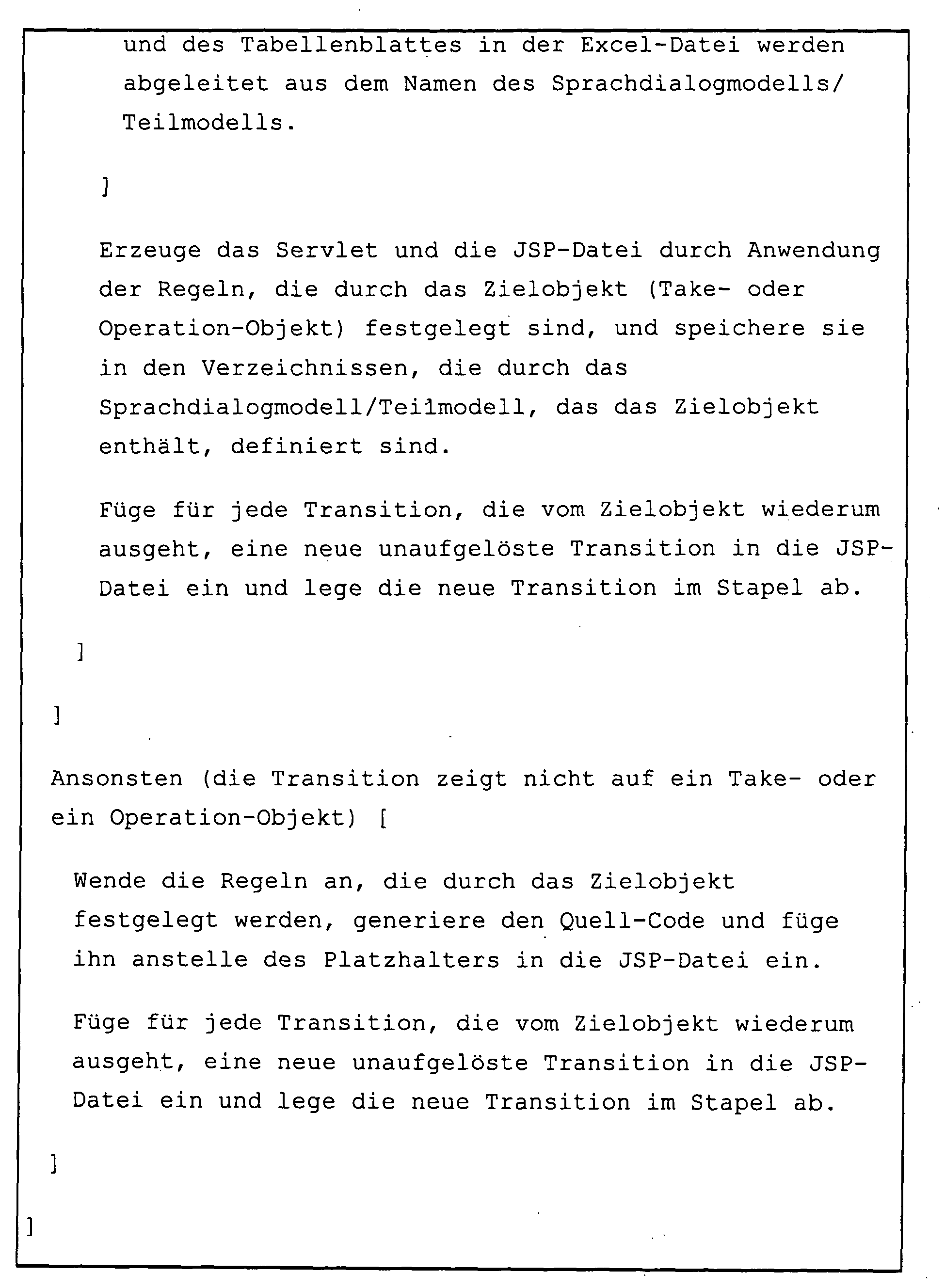

Der Ansatz der identischen Modularisierung zum einen auf Seiten des Sprachdialogmodells und zum anderen entsprechend auf Seiten des Eclipse-Projekts sowie der Prompt-Liste ermöglicht einen robusten und effizienten Merging-Algorithmus, der während des automatischen Merging-Prozesses das zusammenführen von späteren Modifikationen am Sprachdialogmodell und zwischenzeitlich erfolgten manuellen Modifikationen am Quell-Code und/oder der Prompt-Liste erlaubt. Hierbei werden nicht mehr nur die unterschiedlichen Arbeitsstände des Eclipse-Projekts und der Prompt-Liste miteinander verglichen, sondern Kreuzvergleiche zwischen den unterschiedlichen Arbeitsständen des Sprachdialogmodells, des Quell-Codes und der Prompt-Liste durchgeführt.

Im Einzelnen erfolgt der automatische Merging-Prozess wie folgt:

Zum automatischen Zusammenführen der Modifizierungen am Sprachdialogmodell und am Quell-Code werden herangezogen:
[1]der manuell unbearbeitete Quell-Code, der das Generat aus dem aktuellen Arbeitsstand des Sprachdialogmodells ist, d.h. inklusive der aktuellen Modifizierungen am Modell seit dem letzten Merging-Prozess, die noch nicht zusammengeführt wurden;
[2]der manuell unbearbeitete Quell-Code, der das Generat aus dem Arbeitsstand des Sprachdilogmodells ist, das Grundlage des letzten Merging-Prozesses war; sowie
[3]der Quell-Code aus dem aktuellen Arbeitsstand des Eclispe-Projekts, d.h. inklusive der seit dem letzten Merging-Prozess durchgeführten manuellen Modifizierungen am Quell-Code.

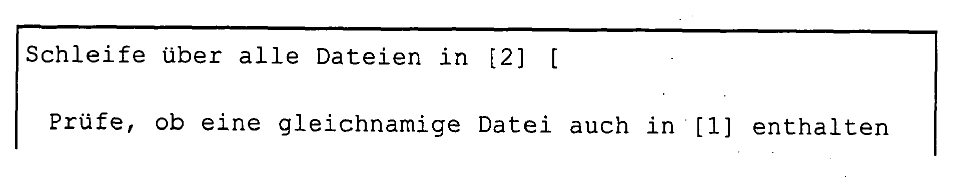

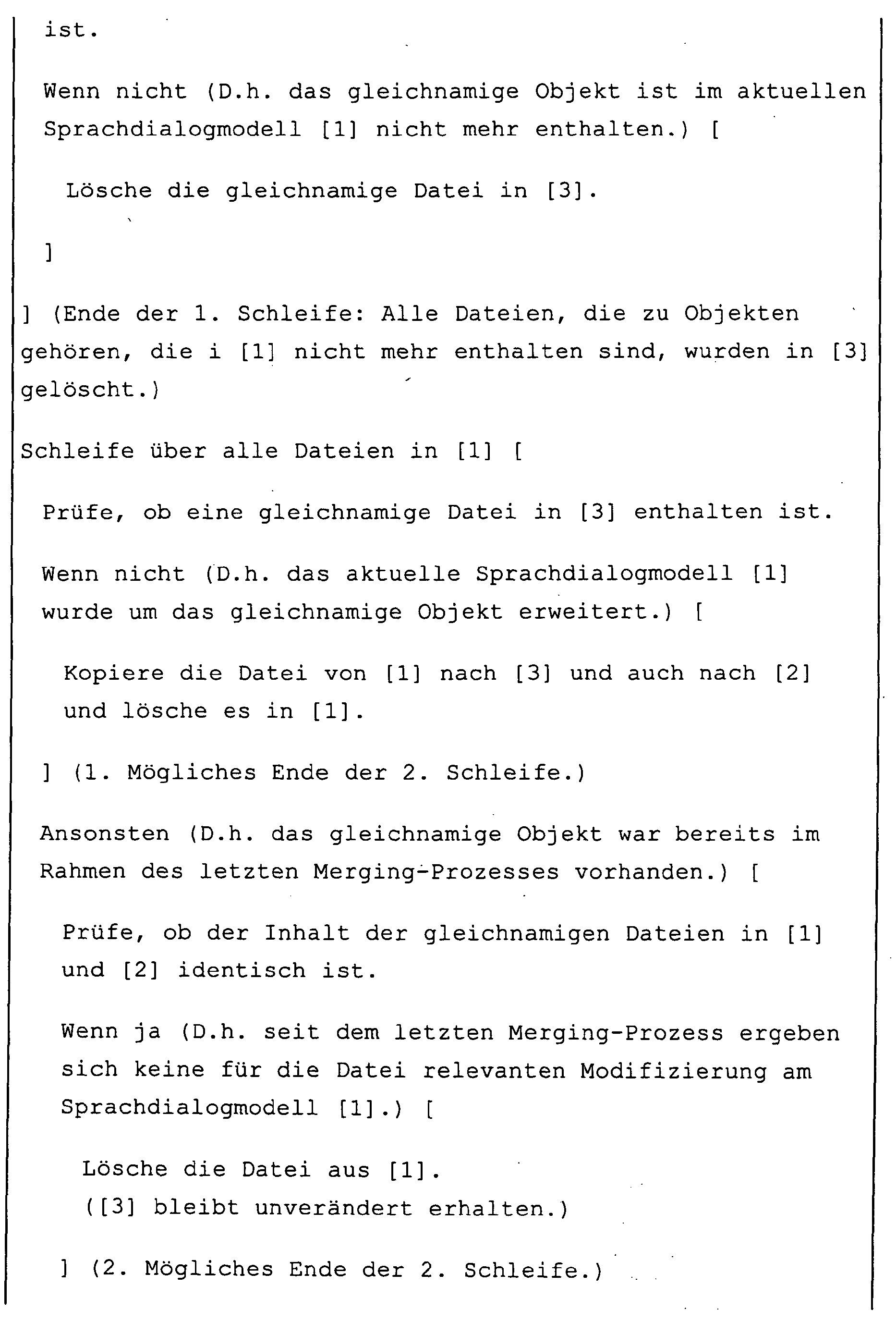

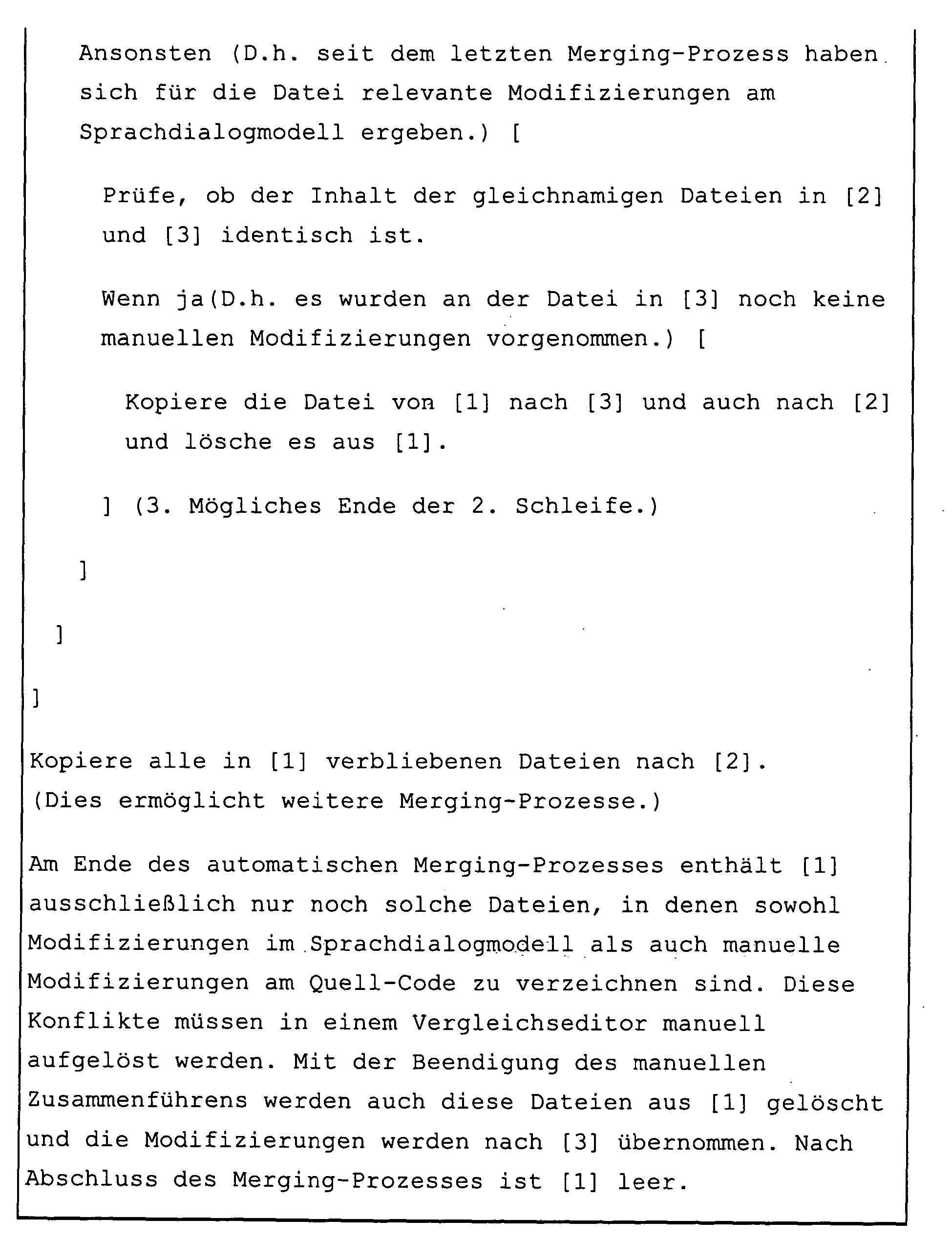

Zum automatischen Zusammenführen der Modifizierungen am Sprachdialogmodell und an der Prompt-Liste werden herangezogen:
[1]die manuell unbearbeitete Prompt-Liste, die das Generat aus dem Arbeitsstand des Sprachdialogmodells ist, das Grundlage des letzten Merging-Prozesses war;
[2]die manuell unbearbeitete Prompt-Liste, die das Generat aus dem aktuellen Arbeitsstand des Sprachdialogmodells ist, d.h. inklusive der aktellen Modifizierungen am Modell seit dem letzten Merging-Prozess, die noch nicht zusammengeführt wurden;
[3]die Prompt-Liste im aktuellen Arbeitsstand, d.h. inklusive aller bis dahin manuell ausformulierten Prompts und sonstigen manuellen Modifizierungen; und
[4]die Zieldatei für das Resultat dieses Merging-Prozesses, die vor Ausführung des Merging-Prozesses eine Kopie von [2] ist.

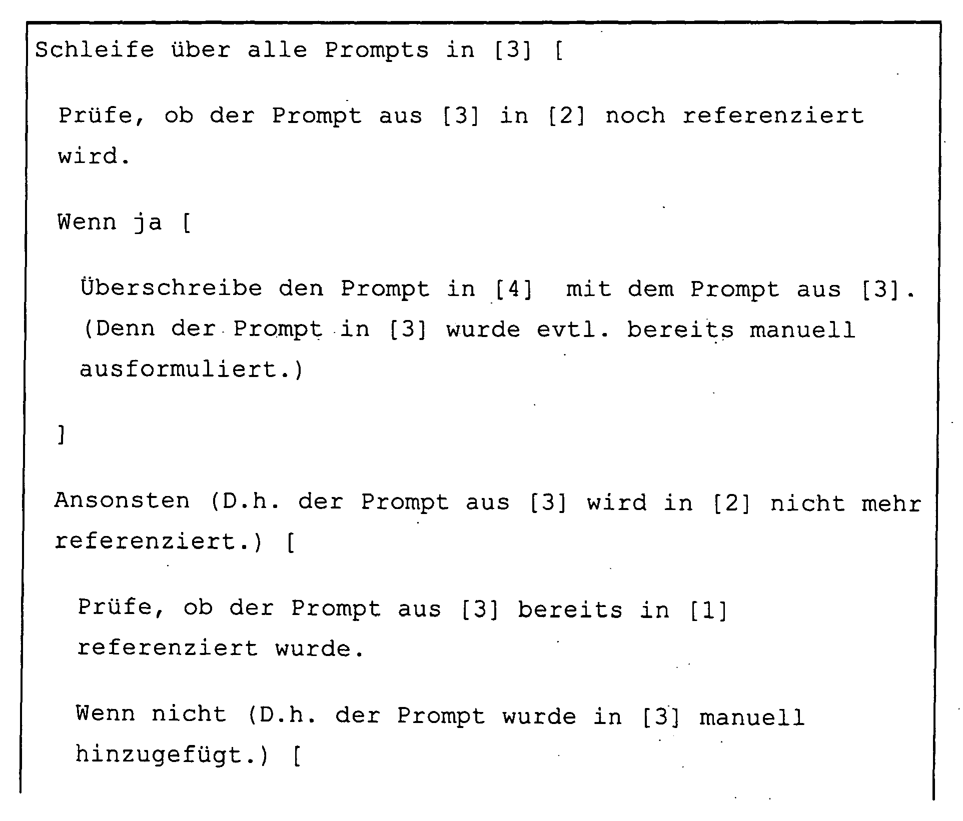

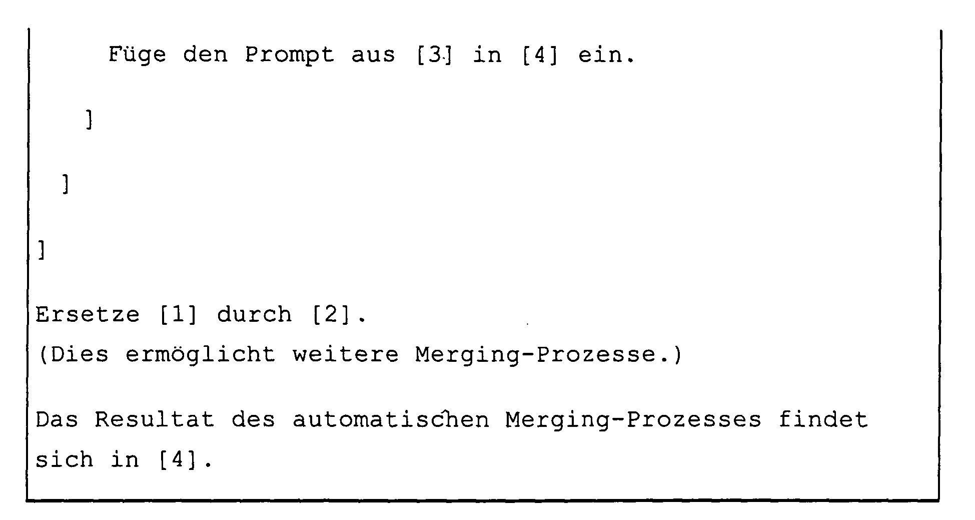

Die beschriebenen Prozesse wurden in Form von Plug-Ins in die Eclipse-IDE integriert. Für die Entwicklung von Sprachapplikationen steht damit eine integrierte Arbeitsumgebung für den gesamten Entwicklungszyklus vom Design über die Code-Generierung und Code-Bearbeitung, das Prompt-Design und die Prompt-Integration, das Aktualisieren und Zusammenführen von Modifizierungen am Sprachdialogmodell mit manuellen Modifizierungen am Quell-Code innerhalb des Eclipse-Projekts, bis hin zum Kompilieren und Ausführen des Projekts sowie zum Beseitigen von Fehlern (engl.: debug) zur Verfügung.

## Patentansprüche

1. Verfahren zum automatisierten Erzeugen einer VoiceXML-Sprachapplikation, umfassend die Schritte:
Bereitstellen eines aus dem UML-Zustandsdiagramm abgeleiteten, mehrere spezifische Metaobjekte umfassenden Metamodells zur Erzeugung wenigstens eines Sprachdialogmodells;
Erzeugen wenigstens eines mehrere Call-Flow-Objekte enthaltenden Sprachdialogmodells einer zu erzeugenden VoiceXML-Sprachapplikation unter Verwendung der spezifischen Metaobjekte;
Speichern des Sprachdialogmodells in einer vorbestimmten Form;
automatisches Generieren eines Eclipse-Projekts, welches den Quell-Code der VoiceXML-Sprachapplikation enthält, und zwar unter Verwendung des gespeicherten Sprachdialogmodells.

2. Verfahren nach Anspruch 1, **dadurch gekennzeichnet, dass** die VoiceXML-Sprachapplikation das Erkennen und Verstehen natürlicher Sprache umfasst.

3. Verfahren nach einem der vorstehenden Ansprüche, **dadurch gekennzeichnet, dass** das Sprachdialogmodell in einer XMI- oder einer SCXML-Form abgespeichert wird.

4. Verfahren nach einem der vorstehenden Ansprüche, **dadurch gekennzeichnet, dass** das Sprachdialogmodell zur strukturierten grafischen Darstellung komplexer Sprachdialoge in mehrere unterschiedliche Sprachdialogteilmodelle unterteilt wird.

5. Verfahren nach einem der vorstehenden Ansprüche, **dadurch gekennzeichnet, dass**
das Eclipse-Projekt für jedes Sprachdialogmodell und/oder jedes Sprachdialogteilmodell jeweils ein Verzeichnis enthält, wobei die Bezeichnung eines Verzeichnisses der Bezeichnung des zugehörigen Sprachdialog- oder Sprachdialogteilmodells entspricht und wobei die Struktur der Verzeichnisse die Struktur der jeweiligen Srachdialog- oder Sprachdialogteilmodelle widerspiegelt; und
dass jedes Verzeichnis für jedes Call-Flow-Objekt des dazugehörenden Sprachdialog- oder Sprachdialogteilmodells eine Datei enthält, wobei die Bezeichnung der Datei der Bezeichnung des zugehörigen Call-Flow-Objekts entspricht.

6. Verfahren nach einem der vorstehenden Ansprüche, ferner umfassend die Schritte:
automatisches Generieren einer zur VoiceXML-Sprachapplikation gehörenden Prompt-Liste, welche die notwendigen Sprachausgaben und Eingabeaufforderungen enthält, und zwar unter Verwendung des gespeicherten Sprachdialogmodells;
automatisches Generieren von XML-Konfigurationsdateien unter Verwendung der Prompt-Liste;
automatisches Ablegen der XML-Konfigurationsdateien in ein hierfür vorgesehenes Verzeichnis innerhalb des Eclipse-Projekts.

7. Verfahren nach Anspruch 6, **dadurch gekennzeichnet, dass** die Prompt-Liste eine Excel-Datei ist, welche wenigstens ein Tabellenblatt enthält.

8. Verfahren nach Anspruch 7, **dadurch gekennzeichnet, dass** die Excel-Datei für jedes Sprachdialogmodell und jedes Sprachdialogteilmodell jeweils ein Tabellenblatt enthält, wobei die Bezeichnung eines Tabellenblattes der Bezeichnung des zugehörigen Sprachdialog- oder Sprachdialogteilmodells entspricht.

9. Verfahren nach einem der vorstehenden Ansprüche, ferner umfassend die Schritte
Modifizieren des Sprachdialogmodells oder wenigstens eines Sprachdialogteilmodells und/oder des automatisch generierten Quell-Codes und/oder der automatisch generierten Prompt-Liste; und
automatisches Zusammenführen aller vorgenommenen Modifizierungen und Speichern im Eclipse-Projekt.
